# EUROPEAN PATENT SPECIFICATION

(11) **EP 1 194 042 B1**
(45) Date of publication and mention of the grant of the patent: **26.02.2003**
(21) Application number: 00945841.5
(22) Date of filing: 28.06.2000
(51) Int. Cl.: A23G 3/00, A23G 3/02, A23G 3/30, A23L 1/236

(54) **PREPARATION OF SUGAR-FREE HARD CANDY**
VERFAHREN ZUR HERSTELLUNG VON ZUCKERFREIEN SÜSSWAREN
PREPARATION POUR BONBON DUR SANS SUCRE

(30) Priority: 08.07.1999 GB 9915883
(43) Date of publication of application: 10.04.2002
(73) Proprietor: CERESTAR HOLDING B.V., 4551 LA Sas Van Gent (NL)
(72) Inventor: GONZE, Michel, Henri, André, B-1020 Bruxelles (BE); VAN DER SCHUEREN, Freddy, Maurits, Luc, B-9300 Aalst (BE)
(74) Representative: Wilkinson, Stephen John
(86) International application number: EP0006016
(87) International publication number: WO01003513

(56) References cited:
- EP-A- 0 390 299
- EP-A- 0 500 977
- EP-A- 0 504 924
- EP-A- 0 788 744
- DE-A- 4 228 278
- US-A- 5 578 339
- FRITZSCHING, B.: "Isomalt in hard candy applications." MANUFACTURING CONFECTIONER., vol. 75, no. 11, 1995, pages 65-73, XP000862872 CHICAGO, IL., US ISSN: 0163-4364 cited in the application
- RALEIGH W: "HSH as a bulking agent in confections." MANUFACTURING CONFECTIONER., vol. 75, no. 11, 1995, pages 57-59, XP000957699 CHICAGO, IL., US ISSN: 0163-4364
- HÖRLEIN L.: "Production of low-calorie strawberry jam pleasant in taste and suitable for diabetics using both acesulfame-K and aspartame." INDUSTRIELLE OBST- UND GEMUESEVERWERTUNG, vol. 80, no. 1, 1995, page 2-7 XP000863024 WOLFSBURG, DE ISSN: 0367-939X

## Description

### Technical field

The present invention relates to mixtures consisting of hydrogenated starch hydrolysate syrup and isomalt powder or isomalt syrup. The dry substance of the hydrogenated starch hydrolysate syrup comprises between 22% w/w and 55% w/w higher polyols. The present invention is as defined by the claims and discloses a process for producing sugar-free hard candies. In addition, a new type of sugar-free hard candies is disclosed. The candies are non-hygroscopic, non-sticky, non-cariogenic and show excellent mass viscosity.

### Background of the invention

Recent developments in hard candy manufacture have been the replacement of part or all of the sugar by a sugar alcohol (polyol) in the interest of providing a product having a reduced calorie content and a lower tendency to cause tooth decay. Among the polyols, which have been proposed for the manufacture of hard candy, are isomalt, maltitol, xylitol, erythritol and others.

EP 0 533 334 describes a process for the production of hard candy characterised in that the maltitol content of the sugar alcohol mixture is more than 77% but less than 86% by weight based on dry substance. When the mixture contains 77% or less maltitol the resultant candies become increasingly hygroscopic and sticky, while when the mixture contains 86% and higher maltitol the candies rapidly become opaque as a result of the maltitol crystallisation.

EP 0 611 527 describes a controlled propagation of crystallisation of maltitol in hard candies by applying molecules of molecular weight greater than 1,300 Dalton, preferably greater than 2,000 Dalton and more preferably greater than 3,000 Dalton. Preferably syrups comprising more than 78% maltitol are applied, since syrups comprising less than 60% maltitol give unsatisfactory results in respect to hygroscopicity, cariogenicity and unsuitable application.

US 4,971,798 describes a hydrogenated isomaltulose based hard confection which contains, in addition to the hydrogenated isomaltulose, a medicinal active ingredient. Such a formulation has been found to dissolve more slowly than similar formulations based on sugar, rendering them suitable for dispensing the active ingredient over an extended period time.

Furthermore, it is common general knowledge that hard candies based on hydrogenated isomaltulose are non-hygroscopic but the mass viscosity of hard candies based on hydrogenated isomaltulose is low.

WO 97/30598 describes a sweetener consisting of especially 6-O-α-D-glucopyranosyl-D-sorbitol (1,6 GPS), 1-O-α-D-glucopyranosyl-D-sorbitol (1,1 GPS) and 1-O-α-D-glucopyranosyl-D-mannitol (1,1 GPM), and the use of this sweetener in hard and soft caramels, especially pharmaceutically active caramels. The presence of 1-O-α-D-glucopyranosyl-D-sorbitol (1,1 GPS) results in candies with improved solubility, higher sweetness and lower ability to crystallise, but hard candies based on these hydrogenated isomerised saccharose syrups have even lower mass viscosity than the hard candies based on hydrogenated isomaltulose.

Fritzsching, in The Manufacturing Confectioner Vol 75, No. 11, 1995, pages 65 - 73, describes isomalt in hard candy applications. He demonstrates that the hard candies prepared with 80% isomalt and 20% of a hygroscopic polyol have a higher hygroscopicity than hard candies prepared with pure isomalt. If isomalt is blended with hygroscopic polyols or bulking agents a more excessive packaging like twist wrapping is required. Due to their slight stickiness, loose packing in boxes is not possible.

DE 4228278 discloses a fondant and its production process. The sugar-free fondant comprises 75 to 90% w/w disaccharide alcohol and 10 to 25% w/w of water. The fondant is used in particular as icing agent, and for fillings of pralines. The disaccharide alcohol can be isomalt, maltitol and the like.

EP 0500977 relates to body and mouthfeel potentiated foods and beverages containing neohesperidin dihydrochalcone and a process for preparing them. It describes the flavour and sweetness profile when applying neohesperidin dihydrochalcone.

EP 0788744 relates to de-lactose milk and de-lactose milk powder which are reconstructed with milk proteins and milk fats as major components free or almost free of lactose. Furthermore, the invention relates to foodstuffs containing de-lactose milk and/or de-lactose milk powder. When the de-lactose milk and the de-lactose milk powder are used for the sugar-less foodstuffs, one or more sugar alcohols selected from the group consisting of lactitol, palatinit and maltitol may preferably be used as a sweetener.

A process for producing hard candies comprises preparation of syrups, cooking at elevated temperature and shaping including a cooling phase. The mass viscosity of the hot (temperature > 90°C) syrups is determining the workability and the processing time of the cooling phase. Applying low viscous syrups results during the cooling phase of the shaping of hard candies in a very liquid mass, which needs a considerably long processing time before the mass can be shaped in moulds.

Accordingly, there is a need for highly viscous syrups which are non-hygroscopic and which can be used for the preparation of i.e. sugar-free non-hygroscopic, non-sticky and non-cariogenic hard candies. Applying high viscous syrups shortens the processing time of the cooling phase considerably and it results in an economical advantageous process.

The present invention discloses a syrup (1) having a dry substance of from 60% to 80% consisting of a mixture of hydrogenated starch hydrolysate syrup (2) and isomalt powder or isomalt syrup (3) characterised in that:
a) the dry substance of the syrup (1) consists of from 14 to 25% w/w hydrogenated starch hydrolysate syrup (2) (dry substance) wherein the dry substance of said hydrogenated starch hydrolysate syrup (2) comprises between 22% w/w and 55% w/w higher polyols, and
b) the dry substance of the syrup (1) consists of from 75 to 86% w/w isomalt, and
c) the dry substance of the syrup (1) consists of:
   7% w/w to 52% w/w 6-O-α-D-glucopyranosyl-D-sorbitol (1,6 GPS),
   24.5% w/w to 52% w/w 1-O-α-D-glucopyranosyl-D-mannitol (1,1 GPM),
   0% w/w to 52% w/w 1-O-α-D-glucopyranosyl-D-sorbitol (1,1 GPS),
   0% w/w to 1.3% w/w sorbitol(DP₁),
   2.8% w/w to 13.8% w/w maltitol (DP₂),
   1.5% to 4.2% w/w maltotriitol (DP₃),
   3.0% w/w to 13.5% w/w higher polyols (DPₙ).

The present invention further relates to a syrup having the aforementioned composition and having a dry substance of 70%.

These syrups are used for the preparation of sugar-free hard candies, which are transparent, non-hygroscopic, non-cariogenic and non-sticky.

The present invention further relates to a sugar-free non-cariogenic hard candy with a mass viscosity of at least 25,000 mPa.s, and a candy surface stickiness below 180g (50% RH, 22-23°C) and a moisture pick-up (hygroscopicity at 70% RH and 25°C) after 14 days below 1.5%.

The current invention relates to a process for the production of a sugar-free non-cariogenic hard candy comprising the following steps:
a) preparing a syrup (1) having a dry substance of from 60% to 80% consisting of a mixture of hydrogenated starch hydrolysate syrup (2) and isomalt powder or isomalt syrup (3) characterised in that the dry substance of the syrup (1) consists of from 14 to 25% w/w hydrogenated starch hydrolysate syrup (2) (dry substance) wherein the dry substance of said hydrogenated starch hydrolysate syrup (2) comprises between 22% w/w and 55% w/w higher polyols, and the dry substance of the syrup (1) consists of from 75 to 86% w/w isomalt, and the dry substance of the syrup (1) consists of 7% w/w to 52% w/w 6-O-α-D-glucopyranosyl-D-sorbitol (1,6 GPS), 24.5% w/w to 52% w/w 1-O-a-D-glucopyranosyl-D-mannitol (1,1 GPM), 0% w/w to 52% w/w 1-O-α-D-glucopyranosyl-D-sorbitol (1,1 GPS), 0% w/w to 1.3% w/w sorbitol (DP₁), 2.8% w/w to 13.8% w/w maltitol (DP₂), 1.5% w/w to 4.2% w/w maltotriitol (DP₃), 3.0% w/w to 13.5% w/w higher polyols (DPₙ),
b) cooking at a temperature between 145°C and 170°C and low vacuum, and
c) shaping according to stamping or deposit method.

The current invention further relates to a process wherein flavour and/or colouring matter is added during shaping.

The current invention discloses a process wherein the syrup comprises between 10 to 35% by weight water.

The current invention further relates to a process wherein the water content of the hard candy is less than 4% by weight, preferably less than 2% by weight or less, based upon the weight of the hard candy.

Non-sticky, non-hygroscopic and non-cariogenic sugar-free hard candies are obtained.

### Brief description of the drawings

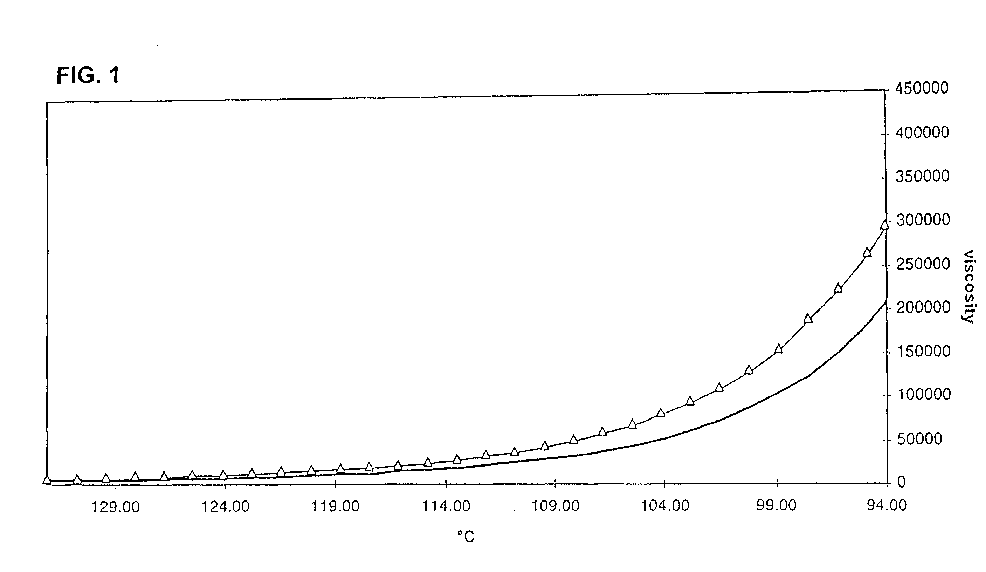

Figure 1 shows the mass viscosity profile of the hard candies prepared with C 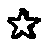 Maltidex C16510, which is a syrup at 70% dry substance and consisting of 70/30 isomalt/hydrogenated starch hydrolysate mixture (= 70% hydrogenated isomaltulose powder (C 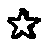 Maltidex C16500) and 30% hydrogenated starch hydrolysate syrup added at commercial base (= 70% dry substance) and wherein the dry substance of hydrogenated starch hydrolysate comprises between 22% and 31% w/w higher polyols)-Δ-), which is compared to the mass viscosity of hard candies prepared from hydrogenated isomaltulose (C 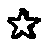 Maltidex C16500,_), respectively.

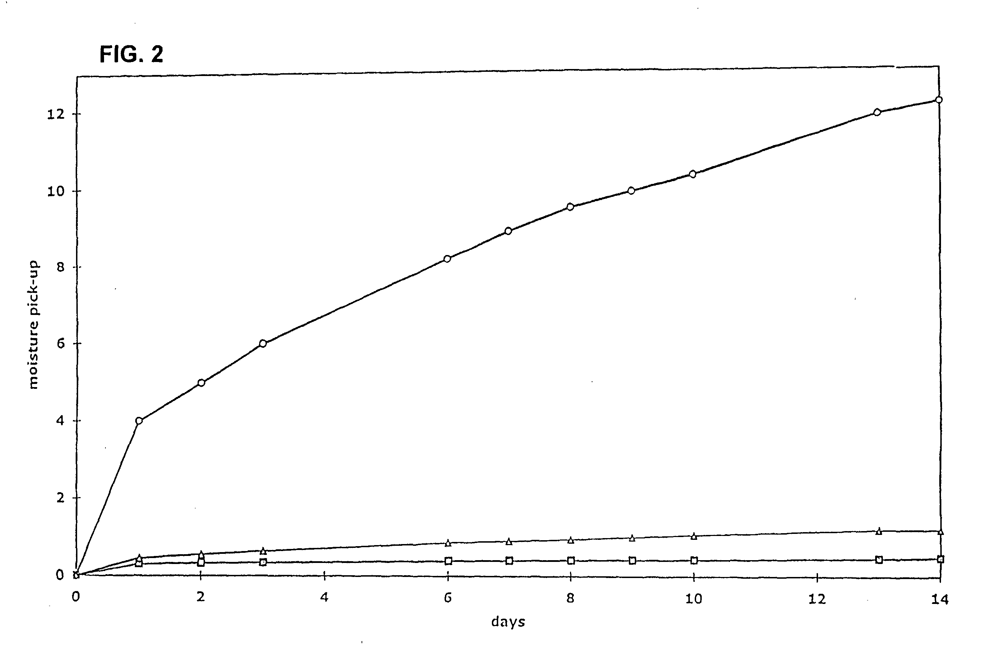

Figure 2 shows the hygroscopicity (at 70% relative humidity, and 25°C) of hard candies prepared with hydrogenated isomaltulose (C 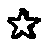 Maltidex C16500, -□-), hydrogenated starch hydrolysate syrup (C 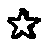 Maltidex M16311,-o-), and (C 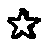 Maltidex C16510) which is a syrup at 70% dry substance and consisting of 70/30 isomalt/hydrogenated starch hydrolysate mixture (= 70% hydrogenated isomaltulose powder (C 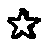 Maltidex C16500) and 30% hydrogenated starch hydrolysate syrup added at commercial base (= 70% dry substance) and wherein the dry substance of hydrogenated starch hydrolysate comprises between 22% and 31% w/w higher polyols) (-Δ-), respectively.

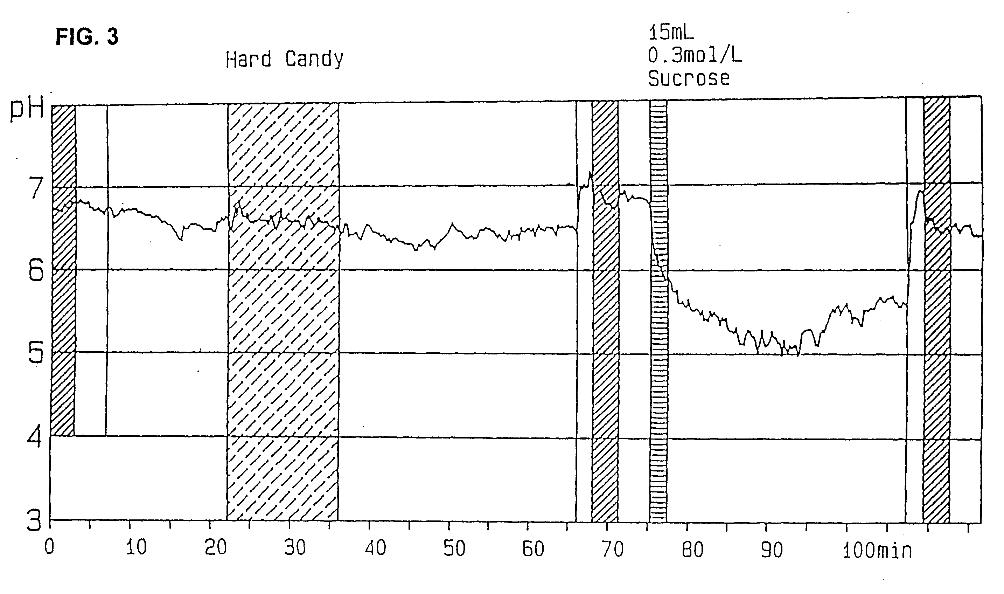

Figure 3 shows the telemetric evaluation of hard candies prepared with C 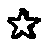 Maltidex C16510 (which is a syrup at 70% dry substance and consisting of 70/30 isomalt/hydrogenated starch hydrolysate mixture (= 70% hydrogenated isomaltulose powder (C 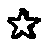 Maltidex C16500) and 30% hydrogenated starch hydrolysate syrup added at commercial base (= 70% dry substance) and wherein the dry substance of hydrogenated starch hydrolysate comprises between 22% and 31% w/w higher polyols) followed by sucrose intake.

### Detailed description of the invention

The present invention discloses a syrup (1) having a dry substance of from 60% to 80%, and preferably a dry substance of about 70%, consisting of a mixture of hydrogenated starch hydrolysate syrup (2) and isomalt powder or isomalt syrup (3) characterised in that:
a) the dry substance of the syrup (1) consists of from 14 to 25% w/w hydrogenated starch hydrolysate syrup (2) (dry substance) wherein the dry substance of said hydrogenated starch hydrolysate syrup (2) comprises between 22% w/w and 55% w/w higher polyols, and
b) the dry substance of the syrup (1) consists of from 75 to 86% w/w isomalt, and
c) the dry substance of the syrup (1) consists of :
   7% w/w to 52% w/w 6-O-α-D-glucopyranosyl-D-sorbitol (1,6 GPS),
   24.5% w/w to 52% w/w 1-O-α-D-glucopyranosyl-D-mannitol (1,1 GPM),
   0% w/w to 52% w/w 1-O-α-D-glucopyranosyl-D-sorbitol (1,1 GPS),
   0% w/w to 1.3% w/w sorbitol (DP₁),
   2.8% w/w to 13.8% w/w maltitol (DP₂),
   1.5% w/w to 4.2% w/w maltotriitol (DP₃),
   3.0% w/w to 13.5% w/w higher polyols (DPₙ)

The syrups can be obtained by hydrogenating mixtures of starch hydrolysates and isomaltulose or 'isomerised' saccharose, or by mixing the hydrogenated products, which are obtained by hydrogenation of starch hydrolysate and isomaltulose and 'isomerised' saccharose, respectively, until the aforementioned composition is obtained.

Starch hydrolysates are obtained by the enzymatic or acidic hydrolysis of starch and the starch hydrolysate comprises glucose, maltose, maltotriose, and higher glucose oligomers (DPn where n = >3). A suitable starch hydrolysate comprises between 22% w/w and 55% w/w higher oligomers, preferably between 25% w/w and 50% w/w higher oligomers.

The dry substance of a typical suitable starch hydrolysate syrup consists of:

| | |
|---|---|
| glucose: | 1-5% w/w |
| maltose: | 20-55% w/w |
| maltotriose: | 11-16.6% w/w |
| higher oligomers: | 22-54% w/w |

Isomaltulose or 6-O-α-D-glucopyranosyl-D-fructofuranose is synthesised from sucrose by the action of an enzyme present in bacterial strains like *Protaminobacter rubrum, Erwinia rhapontici* and *Serratia plymuthica.*

'Isomerised' saccharose is obtained by enzymatic conversion of saccharose (i.e. sucrose) into a saccharide mixture, which contains trehalulose and isomaltulose.

Hydrogenation of the mixtures of starch hydrolysate and isomaltulose or 'isomerised' saccharose results in mixtures comprising sorbitol, maltitol, maltotriitol, and hydrogenated oligomers (higher polyols), 6-O-α-D-glucopyranosyl-D-sorbitol (1,6 GPS), and 1-O-α-D-glucopyranosyl-D-mannitol (1,1 GPM), and 1-O-α-D-glucopyranosyl-D-sorbitol (1,1 GPS).

The components such as sorbitol, maltitol, maltotriitol, and hydrogenated oligomers (higher polyols) are obtained by the hydrogenation of starch hydrolysate syrups. The other components such as 6-O-α-D-glucopyranosyl-D-sorbitol (1,6 GPS), and 1-O-α-D-glucopyranosyl-D-mannitol (1,1 GPM), and 1-O-α-D-glucopyranosyl-D-sorbitol (1,1 GPS) are obtained by hydrogenation of isomaltulose and 'isomerised' saccharose.

Hydrogenation of a starch hydrolysate syrup can give a typical composition wherein the dry substance consists of 52.3-53.6% w/w maltitol, 3.3-3.9% w/w sorbitol, 15.6-16.6 w/w (maltotriitol) and 26.4-28.1% w/w higher polyols (hydrogenated oligomers) and the dry substance is 70%. Whenever the dry substance of the syrup contains at least 50% w/w DP2, the syrup is defined as a maltitol syrup.

Isomalt powder is hydrogenated isomaltulose powder and can be obtained by the hydrogenation of isomaltulose which results in a quasi-equimolar mixture of 6-O-α-D-glucopyranosyl-D-sorbitol (1,6 GPS), and 1-O-α-D-glucopyranosyl-D-mannitol (1,1 GPM). A more typical composition consists of 52.6 -53.6% w/w 6-O-α-D-glucopyranosyl-D-sorbitol (1,6 GPS), and 44.7 - 46.6% w/w 1-O-α-D-glucopyranosyl-D-mannitol (1,1 GPM).

Isomalt syrup is hydrogenated 'isomerised' saccharose which can be prepared according to a method as is described in EP 0 625 578, and the dry substance of the syrup comprises a mixture of 10% w/w to 50% w/w 6-O-α-D-glucopyranosyl-D-sorbitol (1,6 GPS), 35% w/w to 60% w/w 1-O-α-D-glucopyranosyl-D-mannitol (1,1 GPM) and 2% w/w to 60% w/w 1-O-α-D-glucopyranosyl-D-sorbitol (1,1 GPS).

The dry substance of a more typical composition, obtained after the hydrogenation of 'isomerised' saccharose, comprises 43.6% w/w 6-O-α-D-glucopyranosyl-D-sorbitol (1,6 GPS), 49.2% w/w 1-O-α-D-glucopyranosyl-D-mannitol (1,1 GPM) and 3.1% w/w 1-O-α-D-glucopyranosyl-D-sorbitol (1,1 GPS).

A typical composition of the current invention, i.e C 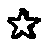 Maltidex C16510 refers to 70/30 isomalt/hydrogenated starch hydrolysate mixture which is a syrup at 70% dry substance and consisting of 70% hydrogenated isomaltulose powder (C 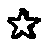 Maltidex C16500) and 30% hydrogenated starch hydrolysate syrup added at commercial base (= 70% dry substance) and wherein the dry substance of hydrogenated starch hydrolysate comprises between 22% and 31% w/w higher polyols. The dry substance of C 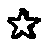 Maltidex C16510 has the following composition:

| | |
|---|---|
| DP₁ | 0.7-1.0% w/w |
| DP₂ | 10-12% w/w |
| DP₃ | 2.4-4.4% w/w |
| DPₙ | 4.6 - 6.6% w/w |
| 1,6 GPS | 41.5 - 42.3% w/w |
| 1,1 GPM | 35.3- 36.8% w/w |

These syrups are used for the preparation of sugar-free hard candies, which are transparent, non-hygroscopic, non-cariogenic and non-sticky.

The current invention relates to a process for the production of a sugar-free non-cariogenic hard candy comprising the following steps:
a) preparing a syrup (1) having a dry substance of from 60% to 80% consisting of a mixture of hydrogenated starch hydrolysate syrup (2) and isomalt powder or isomalt syrup (3) characterised in that the dry substance of the syrup (1) consists of from 14 to 25% w/w hydrogenated starch hydrolysate syrup (2) (dry substance) wherein the dry substance of said hydrogenated starch hydrolysate syrup (2) comprises between 22% w/w and 55% w/w higher polyols, and the dry substance of the syrup (1) consists of from 75 to 86% w/w isomalt, and the dry substance of the syrup (1) consists of 7% w/w to 52% w/w 6-O-a-D-glucopyranosyl-D-sorbitol (1,6 GPS), 24.5% w/w to 52% w/w 1-O-α-D-glucopyranosyl-D-mannitol (1,1 GPM), 0% w/w to 52% w/w 1-O-α-D-glucopyranosyl-D-sorbitol (1,1 GPS), 0% w/w to 1.3% w/w sorbitol (DP₁), 2.8% w/w to 13.8% w/w maltitol (DP₂), 1.5% w/w to 4.2% w/w maltotriitol (DP₃), 3.0% w/w to 13.5% w/w higher polyols (DPₙ),
b) cooking at a temperature between 145°C and 170°C and low vacuum, and
c) shaping according to stamping or deposit method.

Production of the hard candies may be carried out in batch evaporators or in continuous cookers and the process time at elevated temperature generally being up to 15 minutes, preferably in the range 5 to 10 minutes.

The process used to produce hard candies from maltitol containing syrups customarily operates at a temperature between 145°C and 170°C, preferably between 150°C and 160°C. At these temperatures it is preferable to apply a low vacuum, suitably 0.6 to 0.8 bar at the end of the heating period to facilitate water removal. The shaping of the hard candies is performed according to either one of the classically applied methods, being the 'stamping' method and the 'depositing' method, respectively. In the 'stamping' method the cooked mass is cooled to 90°C or 100°C, and eventually colour, flavour and acid are mixed in. Then the mass is further cooled to 60°C or 70°C for shaping. After further cooling the candies are wrapped. In the 'depositing' method the cooked mass is cooled to 110°C or 120°C, and eventually colour, flavour and acid are mixed in. The hot mass is dosed in moulds, further cooled and demoulded afterwards. The current invention further relates to a process wherein flavour and/or colouring matter can be added during shaping.

After further cooling, the hard candies can be wrapped. The obtained sugar-free hard candies, which are transparent, non-hygroscopic, non-cariogenic can be loose packed in boxes due to their non-stickiness.

In each method, the heating phase is followed by a cooling phase and by applying more viscous mixtures (i.e. high mass viscosity) the workability is improved, the processing time of the cooling phase is shortened, and the final viscosity is reached sooner. In principle the processing time of the cooling phase is easily reduced with one quarter of the total time compared to the processing time required to cool the mass consisting of syrups based on hydrogenated isomaltulose alone. When working with a lab cooker on quantities of about 4 kg syrup, the cooling phase can easily be shortened with about 10 to 15 minutes compared to the cooling phase where hydrogenated isomaltulose syrups are applied solely. The processing time of the cooling phase of 4 kg syrup consisting of hydrogenated isomaltulose is about 40 to 60 minutes, while with the syrups of the current invention the processing time is shortened with 10 to 15 minutes.

The mass viscosity is measured directly after cooking with an oscillating shear-disc viscometer. The measurement is started at 135°C and the sample is cooled with constant rate of 2.8°C/ minute to 94°C and the measured values are recorded by means of a potentiometric line recorder.

The mass viscosity of hard candies prepared with hydrogenated isomaltulose is around 20,000 mPa.s at 94°C and hard candies prepared with hydrogenated isomerised saccharose have a mass viscosity of about 15,000 mPa.s. In comparison, the mass viscosity of C 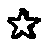 Maltidex C16510 (which is a syryp at 70% dry substance and consisting of 70/30 isomalt/hydrogenated starch hydrolysate mixture (= 70% hydrogenated isomaltulose powder (C 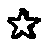 Maltidex C16500) and 30% hydrogenated starch hydrolysate syrup added at commercial base (=70% dry substance) and wherein the dry substance of hydrogenated starch hydrolysate is comprising between 22% and 31% w/w higher polyols)) is about 30,000 mPa.s at 94°C. This increased mass viscosity results in improved workability and the cooling time is reduced with 10 to 15 minutes when working in a lab cooker of 4 kg scale.

Applying syrups, which are obtained by the hydrogenation of starch hydrolysates and isomaltose or 'isomerised' saccharose wherein the dry substance of starch hydrolysate contains less than 22% w/w higher oligomers, results in hard candies having a mass viscosity below 25,000 mPa.s, namely about 23,600 mPa.s.

Hard candies with a mass viscosity of at least 25,000 mPa.s, preferably higher than 27,000 give good workability and significant reduction of the processing time of the cooling phase. The time to reach the appropriate viscosity before moulding, is shortened with one quarter of the total cooling time of syrups based on hydrogenated isomaltulose alone. Furthermore, by applying the syrups of the current invention not only the mass viscosity but also the plasticity of the mass is improved during processing.

The feedstock for preparing hard candies of the present invention may comprise between 10 to 35 % by weight of water based on the weight of the mixture, most often about 30% by weight water. This feedstock is heated to an elevated temperature until a product is obtained which preferably contains less than 5% by weight water, more preferably less than 4%, more preferably less than 2% by weight or less, based upon the weight of the candy.

Furthermore the polyol-containing feedstock of the present invention also may include flavour and/or colouring matter or any other additive commonly found in hard candy products.

The candy stickiness test is performed with the Texture Analyser TA-XT2 from Stable Micro Systems. The stickiness measurement can be done by storing the candy several minutes to hours at specific conditions of humidity and temperature and the more sticky the candy the higher the adhesive force becomes. The confectionery hygroscopicity is measured in a microclimate chamber with an accurate regulation system having the possibility to create conditions of temperature from 10°C to 98°C and relative humidity from 10 to 95%. The moisture pick-up of the samples placed in the microclimate chamber stored under specific conditions of temperature and humidity is calculated from the difference in weight of the samples after a specific storage time.

Hard candies prepared with hydrogenated isomaltulose give a stickiness of 175 g (after 10 minutes cooling) at 21°C and 52% relative humidity (RH), while hard candies prepared with C 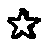 Maltidex C16510 (which is a syryp at 70% dry substance and consisting of 70/30 isomalt/hydrogenated starch hydrolysate mixture (= 70% hydrogenated isomaltulose powder (C 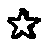 Maltidex C16500) and 30% hydrogenated starch hydrolysate syrup added at commercial base (=70% dry substance) and wherein the dry substance of hydrogenated starch hydrolysate is comprising between 22% and 31% w/w higher polyols) have under similar conditions a candy surface stickiness of 171 g.

Applying syrups, which are obtained by the hydrogenation of starch hydrolysates and isomaltose or 'isomerised' saccharose wherein the dry substance of starch hydrolysate contains less than 22% w/w higher oligomers, gives hard candies with surface stickiness (21°C at 52% RH after 10 minutes cooling) of 215 g.

Stickiness of hard candies prepared from hydrogenated isomerised saccharose is determined as being 173 g at 21°C (10 minutes cooling) and 49% RH. Under the same conditions, hard candies prepared with C 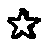 Maltidex C16510 (which is a syryp at 70% dry substance and consisting of 70/30 isomalt/hydrogenated starch hydrolysate mixture (= 70% hydrogenated isomaltulose powder (C 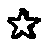 Maltidex C16500) and 30% hydrogenated starch hydrolysate syrup added at commercial base (=70% dry substance) and wherein the dry substance of hydrogenated starch hydrolysate is comprising between 22% and 31% w/w higher polyols) have a candy surface stickiness of 167g.

Surprisingly the surface stickiness of hard candies prepared with C 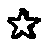 Maltidex C16510 is at least as low as the candy surface stickiness of hard candies prepared with hydrogenated isomaltulose and is even better than surface stickiness of hard candies prepared with hydrogenated isomerised saccharose. Using syrups, which are obtained by the hydrogenation of mixtures comprising starch hydrolysate with less than 22% w/w higher oligomers, results in more sticky hard candies.

Relative humidity below 50% and 22-23°C are ideal conditions to store demoulded hard candies prepared with C 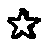 Maltidex C16510, (which is a syryp at 70% dry substance and consisting of 70/30 isomalt/hydrogenated starch hydrolysate mixture (= 70% hydrogenated isomaltulose powder (C 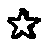 Maltidex C16500) and 30% hydrogenated starch hydrolysate syrup added at commercial base (=70% dry substance) and wherein the dry substance of hydrogenated starch hydrolysate is comprising between 22% and 31% w/w higher polyols). Under these conditions the candy surface stickiness should not exceed 200 g, preferably is not higher than 180 g.

The corresponding hygroscopicity (moisture pick-up) is slightly increased from 0.48% to 1.2% (after 14 days at 70% RH and 25°C) for hard candies prepared with hydrogenated isomaltulose and hard candies prepared with C 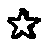 Maltidex C16510 (which is a syryp at 70% dry substance and consisting of 70/30 isomalt/hydrogenated starch hydrolysate mixture (= 70% hydrogenated isomaltulose powder (C 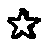 Maltidex C16500) and 30% hydrogenated starch hydrolysate syrup added at commercial base (=70% dry substance) and wherein the dry substance of hydrogenated starch hydrolysate is comprising between 22% and 31% w/w higher polyols), respectively. This increase is insignificant if one considers that moisture pick-up of candies prepared with hydrogenated starch hydrolysate syrups goes up to 11%. The hygroscopicity of hard candies, which are prepared with syrups obtained by the hydrogenation of starch hydrolysates and isomaltose or 'isomerised' saccharose wherein the dry substance of starch hydrolysate contains less than 22% w/w higher oligomers, is about 1.15%. In general a moisture pick-up less than 5% after 14 days is regarded as acceptable.

Due to the low hygroscopicity of the hard candies prepared with C 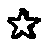 Maltidex C16510 (which is a syryp at 70% dry substance and consisting of 70/30 isomalt/hydrogenated starch hydrolysate mixture (= 70% hydrogenated isomaltulose powder (C 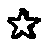 Maltidex C16500) and 30% hydrogenated starch hydrolysate syrup added at commercial base (=70% dry substance) and wherein the dry substance of hydrogenated starch hydrolysate is comprising between 22% and 31% w/w higher polyols), the shelf life is correspondingly increased.

The telemetry technique is used to determine cariogenicity and continuously records plaque pH changes *in vivo* at the enamel-plaque interface and the plaque accumulates on the inserted glass electrode. If the plaque pH stays on the "alkaline side" of 5.7 within 30 minutes after consumption, the food can be labelled 'safe for teeth', or non-cariogenic. Hard candies prepared with C 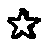 Maltidex C16510 have pH 6 in the telemetric method and are thus non-cariogenic.

The present invention results in non-hygroscopic, non-sticky, non-cariogenic hard candies with mass viscosity of at least 25,000 mPa.s, a candy surface stickiness below 180 g (50% RH, 22-23°C) and moisture pick-up (hygroscopicity at 70% R.H and 25°C) below 1.5%. Moreover as is well known the presence of maltitol improves the flavour release.

The present invention is illustrated by way of the following examples.

### Example 1.

### Cooking

4 kg C 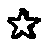 Maltidex C16510 (which is a syryp at 70% dry substance and consisting of 70/30 isomalt/hydrogenated starch hydrolysate mixture (= 70% hydrogenated isomaltulose powder (C 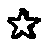 Maltidex C16500) and 30% hydrogenated starch hydrolysate syrup added at commercial base (=70% dry substance) and wherein the dry substance of hydrogenated starch hydrolysate is comprising between 22% and 31% w/w higher polyols) and the composition of dry substance is 0.7 - 1.0 % w/w sorbitol, 10 - 12% w/w maltitol, 2.4 - 4.4% w/w maltotriitol, 4.6 - 6.6 % w/w higher polyols, 41.5 - 42.3 % w/w 6-O-α-D-glucopyranosyl-D-sorbitol (1,6 GPS), 35.3 - 36.8 % w/w 1-O-α-D-glucopyranosyl-D-mannitol (1,1 GPM)) was placed in the lab cooker without water addition. It was cooked under vacuum at 155°C during 5 minutes to reach an end-moisture of max. 1.6%.

### Shaping

### "Depositing" method

The cooked mass was cooled to 110-120°C and colour, flavour and acid were mixed in. The hot mass was dosed in Teflon coated aluminium moulds and allowed cooling further, followed by demoulding. After further cooling the hard candies were wrapped.

### Characterisation

### a) Viscosity of Hard Candies

The oscillating shear-disc viscosimeter consists of two discs, which are vertically installed and face each other in parallel.
The shear-disc, which is arranged above the oscillating sample disc, is connected with a torque-measuring device. The lower disc is connected with the drive and it oscillates at an adjustable frequency and with a constant oscillating angle. A digital temperature control is done for both discs by means of a circulation thermostat with heating capacity up to 210°C and cooling coil with a capacity up to 20°C.
A small sample of the mass was brought directly after cooking on the shear disc, both discs were tilted together, and oscillating was started. The measurement was started at 135°C and cooled with constant rate of 2.8°C/ minute to 94°C, and the measured values were recorded by means of a potentiometric line recorder.

The results are displayed in Table 1.

### b) Confectionery Hygroscopicity

### Microclimate Chamber

The microclimate chamber is made from a stainless steel interior, with conditioned air and diffused moisture injection microprocessor controlled. The door opening gives access to the total working space in which the samples are placed. The microprocessor achieves precise environmental control and the distinct advantage of rapid recovery after each door opening. By means of a fan and air guide walls, a forced but moderated air circulation ensures an even airflow over the samples.

The moisture pick-up of the samples placed in the microclimate chamber stored at 70% relative humidity and at 25°C was calculated from the difference in weight of the samples after 14 days.

The results are displayed in table 1.

### c) Candy Stickiness test

The candy stickiness test is performed with the Texture Analyser TA-XT2 from Stable Micro Systems.
A moulded candy having a diameter of 40 mm and 5 mm thickness was fitted at the lower jaw of the texture analyser base. A transparent foil loop of specific dimensions (100 mm length and 12 mm width) was fitted into the upper jaw and brought on the candy surface with a force of 40 g. The loop was then pulled away from the candy surface at high speed (10 mm/sec) and the adhesive force was measured. The stickiness measurements were done at 52% relative humidity at 21°C or at 49% relative humidity and 21°C.

The results are displayed in table 1.

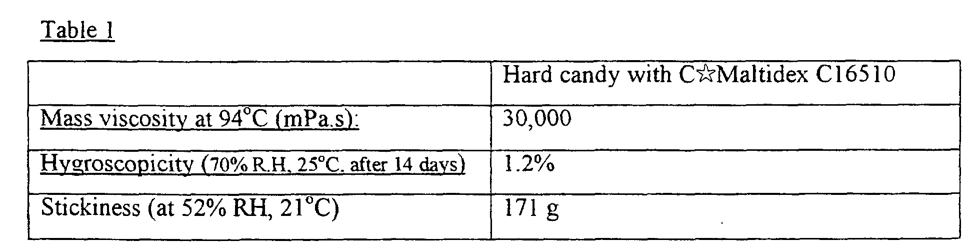

The viscosity is shown in Figure 1.
The confectionery hygroscopicity is displayed in Figure 2.
The more sticky the candy the higher the adhesive force (here expressed in g).
The hard candies have high mass viscosity, and are non-hygroscopic and non-sticky.

### Telemetric method

The cariogenicity of hard candies prepared with C 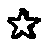 Maltidex C16510 is determined with the telemetric method.

The telemetry technique continuously records plaque pH changes *in vivo* at the enamel-plaque interface and the plaque accumulates on the inserted glass electrode. If the plaque pH stays on the "alkaline side" of 5.7 within 30 minutes after consumption, the food can be labelled 'safe for teeth', or non-cariogenic.

Figure 3 shows the telemetric evaluation of hard candies prepared with C 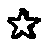 Maltidex C 16510, followed by sucrose intake.
After consumption of hard candies prepared with C 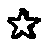 Maltidex C16510 pH stays above 6 and the hard candies are thus non-cariogenic.

### Example 2.

### Cooking

4 kg syrup (d.s. = 70% and wherein the composition of dry substance is: 0.3-0.7 % w/w sorbitol, 6.3-8.4% w/w maltitol, 1.3 - 3.4% w/w maltotriitol, 2.7 - 4.7 % w/w higher polyols, 45.2 - 46.1 % w/w 6-O-α-D-glucopyranosyl-D-sorbitol (1,6 GPS), 38.4 - 40.1 % w/w 1-O-α-D-glucopyranosyl-D-mannitol (1,1 GPM)) was placed in the lab cooker without water addition. It was cooked under vacuum at 155°C during 5 minutes to reach an end-moisture of max. 1.5%.

Shaping of the hard candies was similar as in example 1. The hard candies were characterised by measuring the mass viscosity, hygroscopicity, and stickiness according to the methods described in example 1.

The obtained results are displayed in Table 2.

**Table 2**

| | Hard candy with syrup of example 2 |
|---|---|
| Mass viscosity at 94°C (mPa.s): | 25,000 |
| Hygroscopicity (70% R.H, 25°C. after 14 days) | 0.96% |
| Stickiness (at 52% RH, 21°C) | 176 g |

The hard candies have high mass viscosity, and are non-hygroscopic and non-sticky.

### Comparative example 1.

### Cooking

4 kg hydrogenated isomaltulose powder (C 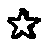 Maltidex C16500) was first mixed with 1.3 kg water and pre-heated to 90-100°C. Then the mixture was cooked up in the lab cooker under vacuum at 155°C during 5 minutes to reach an end-moisture of 1.6%.

Shaping of the hard candies was similar as in example 1. The hard candies were characterised by measuring the mass viscosity, hygroscopicity, and stickiness according to the methods described in example 1.

The obtained results are displayed in Table 3.

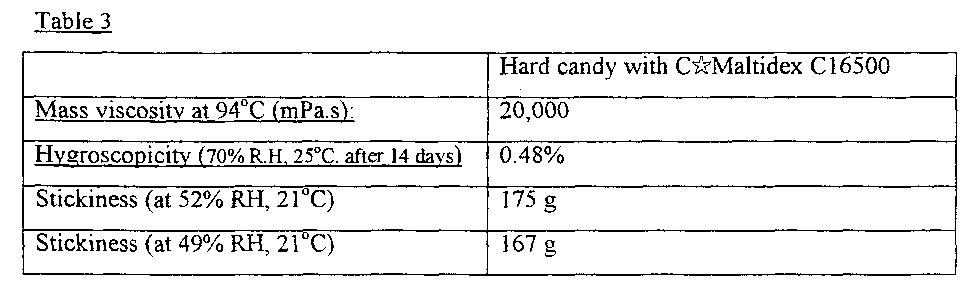

The hard candies are non-hygroscopic, non-sticky but the mass viscosity is too low.

### Comparative Example 2.

### Cooking

4 kg hydrogenated starch hydrolysate syrup at 70% dry substance (C 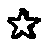 Maltidex L16303, M16311 or H16323) was placed in the lab cooker without water addition. It was cooked under vacuum at 168°C during 5 minutes to reach an end-moisture of max. 1%.

Shaping of the hard candies was similar as in example 1. The hard candies were characterised by measuring the mass viscosity, hygroscopicity, and stickiness according to the methods described in example 1.

The obtained results are displayed in Table 4.

**Table 4**

| | Hard candy with hydrogenated starch hydrolysate syrup |
|---|---|
| Mass viscosity at 94°C (mPa.s): | 533,029 |
| Hygroscopicity (70% R.H, 25°C. after 14 days) | 11% |

The hard candies are very hygroscopic.

### Comparative Example 3.

### Cooking

4 kg isomalt/hydrogenated starch hydrolysate syrup wherein the dry substance comprises below 22% w/w higher polyols (d.s. = 70% and dry substance consists of between 41.5-42.3% w/w 6-O-α-D-glucopyranosyl-D-sorbitol (1,6 GPS), between 35.3 - 36.8% w/w 1-O-α-D-glucopyranosyl-D-mannitol (1,1 GPM), between 0.8 - 1.0% w/w sorbitol, between 10.5 - 12.5% w/w maltitol, between 3.3 - 5.3% w/w maltotriitol, and between 3.1 - 5.1% w/w higher polyols) was placed in the lab cooker without water addition. It was cooked under vacuum at 155°C during 5 minutes to reach an end-moisture of max. 1.6%.

Shaping of the hard candies was similar as in example 1. The hard candies were characterised by measuring the mass viscosity, hygroscopicity, and stickiness according to the methods described in example 1.

The obtained results are displayed in Table 5.

**Table 5**

| | Hard candy with syrup of comparative example 3 |
|---|---|
| Mass viscosity at 94°C (mPa.s): | 23,600 |
| Hygroscopicity (70% R.H. 25°C. after 14 days) | 1.15% |
| Stickiness (at 52% RH, 21°C) | 215 g |

The hard candies are non-hygroscopic, but sticky and the mass viscosity is too low.

### Comparative Example 4.

### Cooking

4 kg hydrogenated isomerised saccharose syrup (d.s. = 70% and dry substance comprises 43.6% 6-O-α-D-glucopyranosyl-D-sorbitol (1,6 GPS), 49.2% 1-O-α-D-glucopyranosyl-D-mannitol (1,1 GPM) and 3.1% 1-O-α-D-glucopyranosyl-D-sorbitol (1,1 GPS)) was placed in the lab cooker without water addition. It was cooked under vacuum at 155°C during 5 minutes to reach an end-moisture of max. 1.6%.

Shaping of the hard candies was similar as in example 1. The hard candies were characterised by measuring the mass viscosity, hygroscopicity, and stickiness according to the methods described in example 1.

The obtained results are displayed in Table 6.

**Table 6**

| | Hard candy with hydrogenated 'isomerised' saccharose |
|---|---|
| Mass viscosity at 94°C (mPa.s): | 15,000 |
| Hygroscopicity (70% R.H. 25°C, after 11 days) | 0.96% |
| Stickiness (at 49% RH, 21°C) | 173 g |

The hard candies are non-hygroscopic, non-sticky, but the mass viscosity is too low.

## Claims

1. A syrup (1) having a dry substance of from 60 to 80% consisting of a mixture of hydrogenated starch hydrolysate syrup (2) and isomalt powder or isomalt syrup (3) **characterised in that**:
a) the dry substance of the syrup (1) consists of from 14 to 25% w/w hydrogenated starch hydrolysate syrup (2) (dry substance) wherein the dry substance of said hydrogenated starch hydrolysate syrup (2) comprises between 22 and 55% w/w higher polyols, and
b) the dry substance of the syrup (1) consists of from 75 to 86% w/w isomalt, and
c) the dry substance of the syrup (1) consists of:
7 to 52% w/w 6-O-α-D-glucopyranosyl-D-sorbitol (1,6 GPS)
24.5 to 52% w/w 1-O-α-D-glucopyranosyl-D-mannitol (1,1 GPM)
0 to 52% w/w 1-O-α-D-glucopyranosyl-D-sorbitol (1,1 GPS)
0 to 1.3% w/w sorbitol (DP₁)
2.8 to 13.8% w/w maltitol (DP₂)
1.5 to 4.2% w/w maltotriitol (DP₃)
3.0 to 13.5% w/w higher polyols (DPₙ)

2. A syrup according to claim 1 **characterised in that** said syrup has a dry substance of 70%.

3. A sugar-free non-cariogenic hard candy comprising a syrup according to claims 1 or 2.

4. A sugar-free non-cariogenic hard candy according to claim 3 **characterised in that** the mass viscosity is at least 25,000 mPa.s, and that the candy surface stickiness is below 180g (50% RH, 22-23°C) and the moisture pick-up (hygroscopicity at 70% RH and 25°C) after 14 days is below 1.5%.

5. A process for the production of a sugar-free non-cariogenic hard candy comprising the following steps:
a) preparing a syrup (1) having a dry substance of from 60 to 80% consisting of a mixture of hydrogenated starch hydrolysate syrup (2) and isomalt powder or isomalt syrup (3) **characterised in that** the dry substance of the syrup (1) consists of from 14 to 25% w/w hydrogenated starch hydrolysate syrup (2) (dry substance) wherein the dry substance of said hydrogenated starch hydrolysate syrup (2) comprises between 22 and 55% w/w higher polyols, and the dry substance of the syrup (1) consists of from 75 to 86% w/w isomalt, and the dry substance of the syrup (1) consists of 7 to 52% w/w 6-O-α-D-glucopyranosyl-D-sorbitol (1,6 GPS), 24.5 to 52% w/w 1-O-α-D-glucopyranosyl-D-mannitol (1,1 GPM), 0 to 52% w/w 1-O-α-glucopyranosyl-D-sorbitol (1,1 GPS), 0 to 1.3% w/w sorbitol (DP₁), 2.8 to 13.8% w/w maltitol (DP₂), 1.5 to 4.2% w/w maltotriitol (DP₃), 3.0 to 13.5% w/w higher polyols (DPₙ),
b) cooking at a temperature between 145 and 170°C and low vacuum, and
c) shaping according to stamping or deposit method.

6. A process according to claim 5 **characterised in that** flavour and/or colouring matter is added during shaping.

7. A process according to claims 5 or 6 **characterised in that** the syrup comprises between 10 to 35% by weight water.

8. A process according to any one of claims 5 to 7 **characterised in that** the water content of the hard candy is less than 4% by weight, preferably less than 2% by weight or less, based upon the weight of the hard candy.

## Patentansprüche

1. Sirup (1) mit einer Trockensubstanz von 60 bis 80%, bestehend aus einer Mischung von hydriertem Stärkehydrolysatsirup (2) und Isomaltpulver oder Isomaltsirup (3), **dadurch gekennzeichnet, daß**:
a) die Trockensubstanz des Sirups (1) aus 14 bis 25% w/w hydriertem Stärkehydrolysatsirup (2) (Trockensubstanz) besteht, wobei die Trockensubstanz des hydrierten Stärkehydrolysatsirups (2) zwischen 22 und 55% w/w höhere Polyole umfaßt, und
b) die Trockensubstanz des Sirups (1) aus 75 bis 86% w/w Isomalt besteht, und
c) die Trockensubstanz des Sirups (1) aus:
7 bis 52% w/w 6-O-α-D-Glukopyranosyl-D-sorbit (1,6 GPS)
24,5 bis 52% w/w 1-O-α-D-Glukopyranosyl-D-mannit (1,1 GPM)
0 bis 52% w/w 1-O-α-D-Glukopyranosyl-D-sorbit (1,1 GPS)
0 bis 1,3% w/w Sorbit (DP₁)
2,8 bis 13,8% w/w Maltit (DP₂)
1,5 bis 4,2% w/w Maltotriitol (DP₃)
3,0 bis 13,5% w/w höhere Polyole (DPₙ)
besteht.

2. Sirup nach Anspruch 1, **dadurch gekennzeichnet, daß** der Sirup eine Trockensubstanz von 70% hat.

3. Zuckerfreie, nicht-kariogene, harte Süßware umfassend einen Sirup nach einem der Ansprüche 1 oder 2.

4. Zuckerfreie, nicht-kariogene, harte Süßware nach Anspruch 3, **dadurch gekennzeichnet, daß** die Massenviskosität mindestens 25.000 mPa.s ist, und daß die Klebrigkeit der Süßwarenoberfläche unter 180 g (50% RF, 22-23°C) ist, und daß die Feuchtigkeitsaufnahme (Hygroskopizität bei 70% RF und 25°C) nach 14 Tagen unter 1,5% ist.

5. Verfahren zur Herstellung einer zuckerfreien, nicht-kariogenen, harten Süßware, welches die folgenden Schritte umfaßt:
a) Herstellung eines Sirups (1) mit einer Trockensubstanz von 60 bis 80%, bestehend aus einer Mischung aus hydriertem Stärkehydrolysatsirup (2) und Isomaltpulver oder Isomaltsirup (3), **dadurch gekennzeichnet, daß** die Trockensubstanz des Sirups (1) aus 14 bis 25% w/w hydriertem Stärkehydrolysatsirup (2) (Trockensubstanz) besteht, wobei die Trockensubstanz des hydrierten Stärkehydrolysatsirups (2) zwischen 22 und 55% w/w höhere Polyole umfaßt, und die Trockensubstanz des Sirups (1) aus 75 bis 86% w/w Isomalt besteht, und die Trockensubstanz des Sirups (1) aus 7 bis 52% w/w 6-O-α-D-Glukopyranosyl-D-sorbit (1,6 GPS), 24,5 bis 52% w/w 1-O-α-D-Glukopyranosyl-D-mannit (1,1 GPM), 0 bis 52% w/w 1-O-α-Glukopyranosyl-D-sorbit (1,1 GPS), 0 bis 1,3% w/w Sorbit (DP₁), 2,8 bis 13,8% w/w Maltit (DP₂), 1,5 bis 4,2% w/w Maltotriitol (DP₃), 3,0 bis 13,5% w/w höhere Polyole (DPₙ) besteht,
b) Kochen bei einer Temperatur zwischen 145 und 170°C und geringem Vakuum, und
c) Formen durch Stempel- oder Ablagerungsmethode.

6. Verfahren nach Anspruch 5, **dadurch gekennzeichnet, daß** Aroma und/oder färbendes Mittel während des Formens zugegeben wird.

7. Verfahren nach Anspruch 5 oder 6, **dadurch gekennzeichnet, daß** der Sirup zwischen 10 bis 35 Gew.-% Wasser umfaßt.

8. Verfahren nach einem der Ansprüche 5 bis 7, **dadurch gekennzeichnet, daß** der Wassergehalt der harten Süßware weniger als 4 Gew.-% ist, bevorzugt weniger als 2 Gew.-% oder weniger, bezogen auf das Gewicht der harten Süßware.

## Revendications

1. Sirop (1) ayant une teneur en matière sèche de 60 à 80 % constitué d'un mélange de sirop d'hydrolysat d'amidon hydrogéné (2) et d'une poudre d'isomalt ou d'un sirop d'isomalt (3) **caractérisé en ce que** :
a) la matière sèche du sirop (1) est constituée de 14 à 25 % m/m de sirop d'hydrolysat d'amidon hydrogéné (2) (matière sèche) dans lequel la matière sèche dudit sirop d'hydrolysat d'amidon hydrogéné (2) comprend 22 à 55 % m/m de polyols supérieurs, et
b) la matière sèche du sirop (1) est constituée de 75 à 88 % m/m d'isomalt, et
c) la matière sèche du sirop (1) est constituée de :
7 à 52 % m/m de 6-O-α-D-glucopyranosyl-D-sorbitol (1,6-GPS),
24,5 à 52 % m/m de 1-O-α-D-glucopyranosyl-D-mannitol(1,1-GPM),
0 à 52 % m/m de 1-O-α-D-glucopyranosyl-D-sorbitol (1,1-GPS),
0 à 1,3 % m/m de sorbitol (DP₁),
2,8 à 13,8 % m/m de maltitol (DP₂),
1,5 à 4,2 % m/m de maltotriitol (DP₃),
3,0 à 13,5 % m/m de polyols supérieurs (DPₙ).

2. Sirop selon la revendication 1 **caractérisé en ce que** ledit sirop a une teneur en matière sèche de 70 %.

3. Confiserie dure non cariogène sans sucre comprenant un sirop selon l'une des revendications 1 ou 2.

4. Confiserie dure non cariogène sans sucre selon la revendication 3 **caractérisée en ce que** la viscosité en masse est d'au moins 25 000 mPa.s et que l'adhésivité de surface de la confiserie est inférieure à 180 g (50 % H.R., 22-23°C) et son absorption d'humidité (hygroscopicité de 70 % H.R. et 25°C) après 14 jours est inférieure à 1,5 %.

5. Procédé pour la fabrication d'une confiserie dure non cariogène sans sucre comprenant les étapes suivantes consistant à :
a) préparer un sirop (1) ayant une teneur en matière sèche de 60 à 80 % constitué d'un mélange de sirop d'hydrolysat d'amidon hydrogéné (2) et d'une poudre d'isomalt ou d'un sirop d'isomalt (3) **caractérisé en ce que** la matière sèche du sirop (1) est constituée de 14 à 25 % m/m de sirop d'hydrolysat d'amidon hydrogéné (2) (matière sèche) dans lequel la matière sèche dudit sirop d'hydrolysat d'amidon hydrogéné (2) comprend 22 à 55 % m/m de polyols supérieurs, et la matière sèche du sirop (1) est constituée de 75 à 86 % m/m d'isomalt et la matière sèche du sirop (1) est constituée de 7 à 52 % m/m de 5-O-α-D- un glucopyranosyl-D-sorbitol (1,6-GPS), 24,5 à 52 % m/m de 1-O-α-D-glucopyranosyl-D-mannitol(1,1-GPM), 0 à 52 % m/m de 1-O-α-D-glucopyranosyl-D-sorbitol (1,1-GPS), 0 à 1,3 % m/m de sorbitol (DP₁), 2,8 à 13,8 % m/m de maltitol (DP₂), 1,5 à 4,2 % m/m de maltotriitol (DP₃), 3,0 à 13,5 % m/m de polyols supérieurs (DPₙ),
b) cuire à une température comprise entre 145 et 170°C et sous vide faible, et
c) former selon un procédé de moulage ou de dépôt.

6. Procédé selon la revendication 5 **caractérisé en ce qu'**une substance aromatisante et/ou colorante est ajoutée lors de la mise en forme.

7. Procédé selon les revendications 5 ou 6 **caractérisé en ce que** le sirop comprend 10 à 35 % en poids d'eau.

8. Procédé selon l'une quelconque des revendications 5 à 7 **caractérisé en ce que** la teneur en eau de la confiserie dure est inférieure à 4 % en poids, de préférence inférieure à 2 % en poids, par rapport au poids de la confiserie dure.
